# EUROPÄISCHE PATENTSCHRIFT

(11) **EP 0 849 393 B1**
(45) Veröffentlichungstag und Bekanntmachung des Hinweises auf die Patenterteilung: **04.08.1999**
(21) Anmeldenummer: 96120017.7
(22) Anmeldetag: 13.12.1996
(51) Int. Cl.: D21B 1/32, D21B 1/02, B07B 1/24

(54) **Müllauflöser, insbesondere zum Auflösen von Bio-Haushaltsabfällen**
Waste dissolver, in particular from biological domestic waste
Décomposeur de déchets, en particulier à partir de déchets ménagers biologiques

(43) Veröffentlichungstag der Anmeldung: 24.06.1998
(73) Patentinhaber: VERWALTUNGS LOHSE GmbH & Co. KG, D-89522 Heidenheim (DE)
(72) Erfinder: Warnke, Klaus, 89522 Heidenheim (DE)
(74) Vertreter: Dr. Weitzel & Partner

(56) Entgegenhaltungen:
- EP-A- 0 148 375
- WO-A-90/08597
- WO-A-96/39557
- DE-C- 4 235 119

## Beschreibung

Die Erfindung betrifft eine Vorrichtung zum Auflösen von Bioabfällen und Faserstoffabfällen.

EP-A-0 164 428 offenbart eine Auflöse- und Sortieranlage für in Ballenform angeliefertes Altpapier, mit einem Ballen-Zerteilgerät mit Einweichwasser-Spritzrohr, einer diesem nachgeordneten, um eine ungefähr horizontale Achse antreibbaren Einweichtrommel, auf die eine Mischvorrichtung zum Mischen des eingeweichten Altpapiers mit Verdünnungswasser folgt, sowie mit einer um eine gleichfalls ungefähr horizontale Achse drehbaren Sortiertrommel, deren Umfangswand in einem ersten Sortierbereich kleinere Öffnungen als in einem in Durchlaufrichtung zweiten Sortierbereich aufweist. Für die die Öffnungen des zweiten Sortierbereichs passierende Suspension ist ein Zerfaserungsgerät vorgesehen, dessen Auslaß über eine Pumpe mit der Mischvorrichtung verbunden ist.

Aus DE-C-42 35 119 ist ein Müllauflöser bekannt, der einen Behälter mit vertikaler Achse, einen Rotor mit ebenfalls vertikaler Achse, ein im unteren Teil des Behälters angeordneten zylindrisches Siebblech, eine im unteren Teil des Behälters radial außerhalb des Siebbleches angeordnete Schwerschmutzschleuse und einen in den Innenraum des Behälters einfahrbaren Grobschmutzfänger aufweist.

Bei dieser Art von Müllauflösern hat der Behälter im allgemeinen die Form eines Zylinders, dessen Achse vertikal verläuft, der unten einen Boden hat, und der oben offen ist. Der Rotor befindet sich im allgemeinen im Bodenbereich. Meist fällt seine Drehachse mit der Längsachse des Behälters zusammen, jedoch ist auch eine exzentrische Anordnung möglich. Im allgemeinen besteht der Rotor aus einer ebenen Scheibe. Die Zerkleinerungsflügel sind nach Art von Laufschaufeln einer Kreiselpumpe angeordnet.

Beim Betrieb werden in dem Behälter die zu behandelnden, d.h. aufzulösenden Faserstoffe eingetragen, z.B. Bio-Haushaltsabfälle, und außerdem eine Flüssigkeit, im allgemeinen Wasser. Durch die Arbeit des Rotors werden die Faserstoffe auseinandergerissen und zerkleinert und dabei mit der Flüssigkeit vermischt, so daß eine Suspension entsteht. Die Suspension wird durch den Rotor in eine starke Strömung versetzt. Diese hat - in einem Axialschnitt durch den Müllauflöser gesehen - eine Torusform, wobei sich im Rotorbereich zunächst eine Radialströmung nach außen gegen die Behälterwand hin ausbildet, die sodann nach oben steigt, um im Bereich der Oberfläche wieder radial nach innen zu strömen, und von da aus nach unten zum Zentrum des Rotors hin. Dieses Strömungsbild ist erwünscht; durch die Abwärtsströmung gelangen nämlich die in Suspension befindlichen Feststoffe immer wieder in den Rotorbereich, wo sie bearbeitet werden.

Die Aufbereitung von Faserstoffen, insbesondere von Bio-Haushaltsabfällen und Altpapier, bringt besondere Probleme mit sich, die bereits beim Auflösen beginnen. Besonders unangenehm ist der Anteil von Schwerteilen in Gestalt von Steinen, Knochen, Metall usw.. Diese Schwerteile führen beim Auflösevorgang zu erheblichen Verschleißbelastungen der Auflöseorgane.

Um diesen Verschleiß zu verringern oder zu vermeiden, müssen die Schwerteile abgetrennt werden. Vorrichtungen zum Abtrennen von Schwerteilen sind bekannt. Sie verursachen jedoch einen erheblichen apparativen Aufwand. Außerdem haben die bekannten Vorrichtungen haben den Nachteil, daß der Energiebedarf hoch ist, und daß die Abmessungen groß sind. Der Erfindung liegt die Aufgabe zugrunde, diese Nachteile zu verringern oder zu vermeiden und somit eine Vorrichtung zu schaffen, die weniger Energie verbraucht, bezogen auf die Menge des aufzulösenden Abfalls, die geringere Abmessungen hat, und die kontinuierlich arbeiten kann.

Diese Aufgabe wird durch die Merkmale von Anspruch 1 gelöst.

Gemäß der Erfindung werden die Funktionen des Auflösevorganges in einzelne Funktionen zerlegt, nämlich in das Mischen, das Auflösen und das Sichten. Jede dieser Funktionen wird in einem eigenen Aggregat durchgeführt, nämlich in einem Mischer, einem Auflöser und einem Sichter. Dies hat den Vorteil, daß jede Funktion entsprechend ihren besonderen Anforderungen, und daher rationeller und wirtschaftlicher durchgeführt werden kann. Insbesondere wird der Mischer optimiert. Er holt nämlich in geradezu perfekter Weise die genannten Schwerteile aus der Suspension heraus.

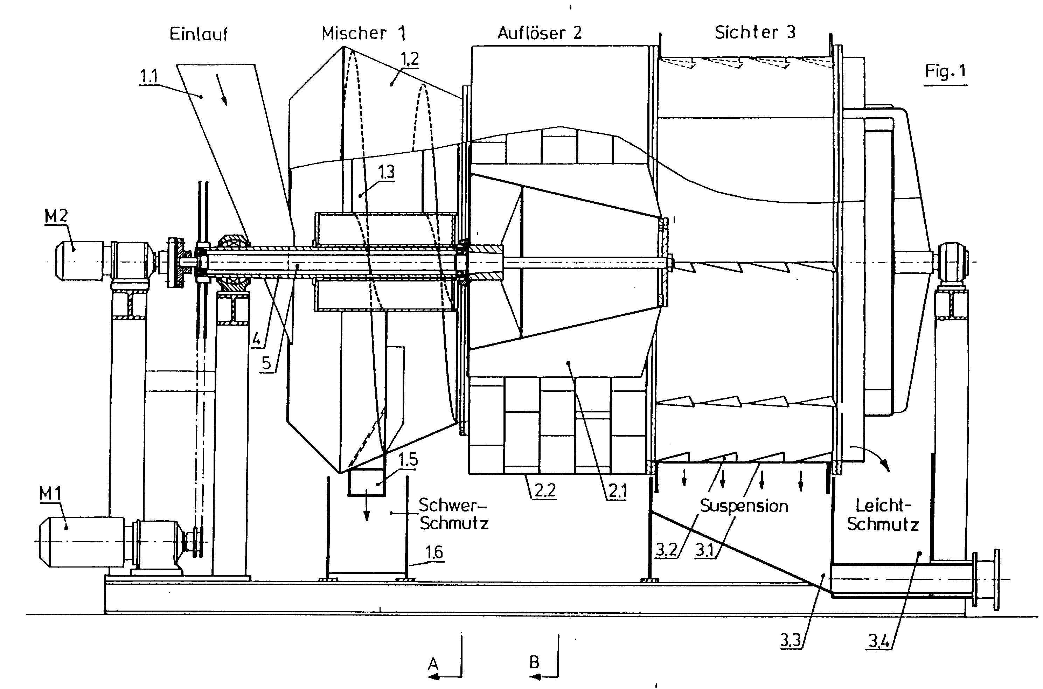

Die Erfindung ist anhand der Zeichnungen näher erläutert. Wie man aus Figur 1 erkennt, umfaßt die Vorrichtung einen Mischer 1, einen Auflöser 2 und einen Sichter 3. Diese drei Aggregate sind koaxial angeordnet, und zwar unmittelbar aufeinanderfolgend.

Der Mischer 1 weist einen Einlaufstutzen 1.1 auf, durch den der zu behandelnde Abfall - Bioabfall oder Faserstoffabfall - zugeführt wird. Außerdem enthält der Mischer einen Wasseranschluß, der hier nicht dargestellt ist. Der Mischer 1 weist ein Gehäuse 1.2 auf. Dieses ist auf seiner Innenseite mit Wendeln 1.3 versehen und angetrieben. Beim Umlauf des Gehäuses 1.2 kommt es zu einem innigen Durchmischen von Abfall und Wasser sowie zu einem Vor-Zerkleinern. Das Strömungsleitblech 1.4 fördert den Schwerschmutz zu einem Schwerschmutzauslaß 1.5, der durch eine handelsübliche Absperrarmatur geschlossen bzw. geöffnet wird, und von dort zu einer Schwerschmutzrinne 1.6

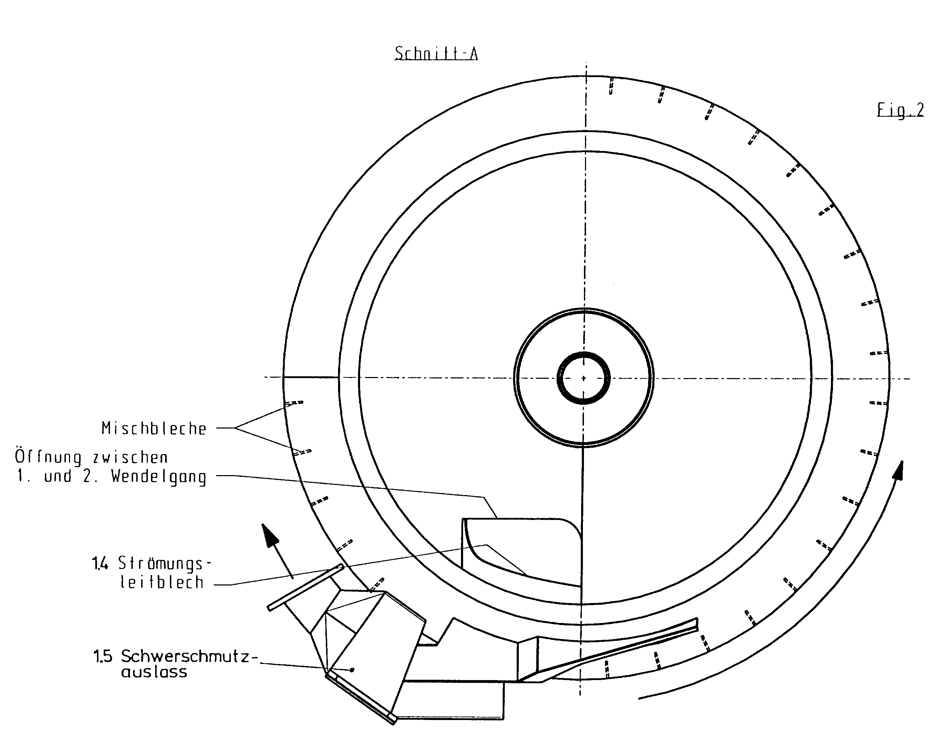

Figur 2 zeigt eine Ansicht A durch den Mischer und läßt somit weitere Einzelheiten von dessen Aufbau erkennen.

Die Figur 3 zeigt den Mischer in schematischer Aufrißansicht.

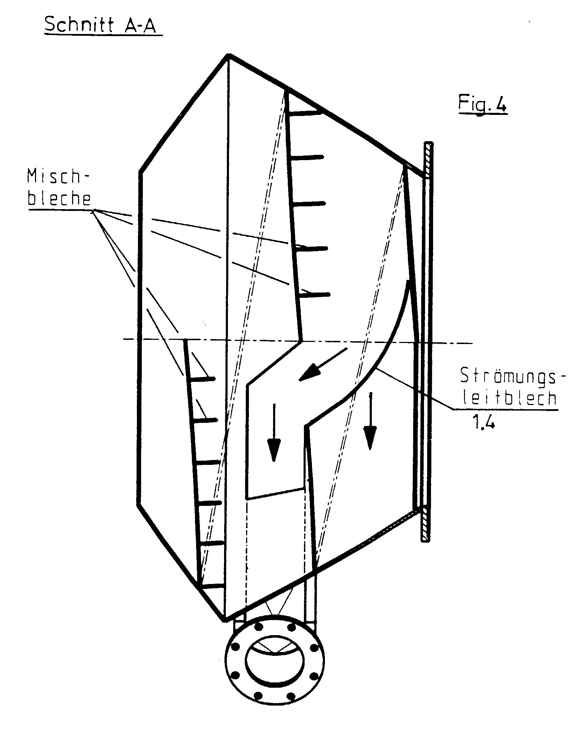

Figur 4 zeigt einen Schnitt A-A durch die Figur 3, dabei sind die entscheidenden Einzelheiten zu erkennen.

Man sieht insbesondere die Wendel, die einen ersten und einen zweiten Wendelgang bildet, ferner die Schmutzschleuse, die Mischbleche sowie das Strömungsleitblech. Das Strömungsleitblech ist am Anfang des zweiten Wendelganges angebracht, und zwar dort, wo der zweite Wendelgang durch eine Aussparung unterbrochen ist. Hierdurch wird ein gewisser Rückstau der Suspension erreicht. Die zu behandelnde Suspension (beispielsweise ein Faserstoffgemisch) fließt durch die Aussparung wieder zurück in den ersten Wendelgang. Da die zu behandelnde Suspension im allgemeinen kontinuierlich in die Mischtrommel eingeführt wird, füllen sich durch den Rückstau die Wendelgänge, bis die Suspension über das Strömungsleitblech überschwappt und in die Auflösetrommel weitergefördert wird. Das Strömungsleitblech hat in einer zweiten Funktion die Aufgabe, die Schwerteile am Weitertransport in den zweiten Wendelgang zu hindern und diese in den Schwerschmutzauslaß zu leiten.

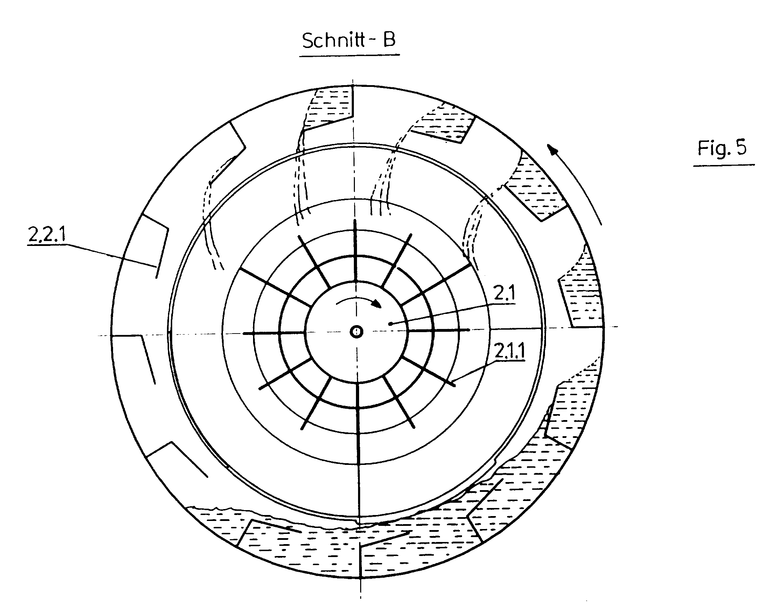

Der Auflöser 2 weist einen Rotor 2.1 sowie einen Auflösebehälter 2.2 auf. Figur 5 veranschaulicht den Aufbau des Auflösers 2 in einem achssenkrechten Schnitt. Wie man hieraus ersieht, umfaßt der Rotor 2.1 eine Mehrzahl von Rotorflügeln 2.1.1. Diese sind im vorliegenden Falle genau radial angeordnet. Sie könnten auch in Drehrichtung oder entgegen der Drehrichtung gekrümmt oder geneigt sein.

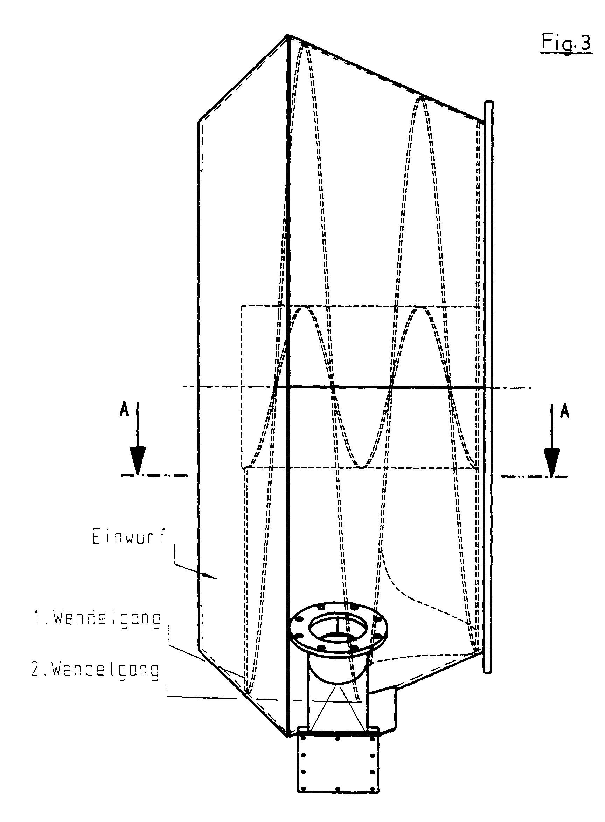

Der Auflösebehälter 2.2 ist an seiner Innenseite mit einer Vielzahl von Schöpfern 2.2.1 versehen. Diese bilden - im achssenkrechten Schnitt der Figur 3 - einen L-förmigen Winkel.

Rotor 2.1 und Auflösebehälter 2.2 sind gegenläufig antreibbar - siehe Pfeile. Dabei können die Drehzahlen von Rotor 2.1 und Auflösebehälter 2.2 unterschiedlich groß sein.

Wie man aus Figur 1 erkennt, sind die Schöpfer 2.2.1 in mehreren Reihen angeordnet. Die Schöpfer einer Reihe erstrecken sich jeweils um den Umfang des Antriebsbehälters 2.2 herum. Die Schöpfer zweier einander benachbarter Reihen sind zueinander versetzt angeordnet, in Umfangsrichtung gesehen.

In axialer Richtung der gesamten Vorrichtung folgt auf den Auflöser der Sichter 3. Dieser umfaßt eine gelochte Trommel 3.1, die auf ihrer Innenseite Förderrippen 3.2 trägt. Trommel 3.1 ist ebenfalls angetrieben. Der Gutstoff aus der Trommel 3.1 gelangt zu einem Gutstoffauslaß 3.3, während der Restabfall zu einer Restabfallrinne 3.4 gelangt.

Die Drehbewegungen der einzelnen Aggregate verlaufen wie folgt:
Mischerbehälter 1.2, Auflösebehälter 2.2 und Sichtertrommel 3.1 laufen im Falle des vorliegenden Ausführungsbeispiels im selben Drehsinn und mit derselben Drehzahl um. Sie werden von einem Motor M1 über eine Hohlwelle 4 gemeinsam angetrieben.

Der Rotor 2.1 des Auflösers 2 hingegen hat einen eigenen Antrieb, und zwar in Gestalt von Motor M2 über eine Massivwelle 5, die sich innerhalb der Hohlwelle 4 befindet.
Theoretisch könnten Mischergehäuse 1.2, Auflösebehälter 2.2 und Sichtertrommel 3.1 mit verschiedenen Drehzahlen angetrieben werden von verschiedenen Antrieben.

Es versteht sich, daß die Vorrichtung noch übliche Komponenten aufweisen kann, beispielsweise, daß die Sichtertrommel 3.1 mit einem Spritzrohr versehen sein kann, um die Löcher der Trommel freizuhalten.

Die Vorrichtung arbeitet wie folgt:

Der Einlaufstutzen 1.1 wird mit dem betreffenden Abfall beschickt, beispielsweise mit Altpapier oder mit Bioabfall. Aufgrund der Umdrehung des Mischergehäuses 1.2 und der Arbeit der Wendeln 1.3 erfolgt eine innige Durchmischung des Abfalls mit zugeführtem Wasser. Hierbei kommt es zu einer Vor-Zerkleinerung, so daß eine Suspension im Mischerbehälter 1.2 entsteht. Ganz entscheidend aber ist - wie oben ausgeführt -, daß der Mischer die Schwerteile aus der Suspension herausholt. Diese Suspension strömt über in den Auflösebehälter 2.2. Dort wird sie von den Schöpfschaufeln 2.2.1 beim Umlauf des Auflösebehälters 2.2 mitgenommen und hochgeschöpft. Im oberen Bereich des Förderweges geben die Schöpfschaufeln 2.2.1 die Suspension ab. Die einzelnen Suspensions-Teilströme gelangen im freien Fall auf die Rotorschaufeln 2.1.1. Durch den Aufprall erfolgt eine intensive Auflösung der Bestandteile, z.B. ein Desintegrieren von Altpapier in einzelne Fasern.

Die nunmehr weitgehend aufgelöste Suspension gelangt schließlich zum Sichter, in welchem die Aufteilung in eine brauchbare, sortierte Suspension und den Restabfall erfolgt.

Die geometrische Achse der gesamten Vorrichtung verläuft am besten horizontal. Sie kann jedoch auch geneigt sein, und zwar entweder derart, daß sie in Auflöserichtung ansteigt oder abfällt.

## Patentansprüche

1. Vorrichtung zum Auflösen von Bioabfällen und Faserstoffabfällen mit den folgenden in Reihe geschalteten Aggregaten:
1.1 mit einem Mischer (1) zur Aufnahme des Abfalles und zu dessen Durchmischung mit Wasser, mit einem Schwerschmutzauslaß (1.5);
1.2 mit einem Auflöser (2) zum Desintegrieren und Zerkleinern des Abfalles; und
1.3 mit einem Sichter (3) zum Abtrennen von aufgelöster Abfallsuspension (Gutstoff) vom Restabfall; wobei
1.4 der Mischer (1) eine drehbar gelagerte, zur Drehachse koaxiale Mischtrommel (1.2) mit einem Einlaß und einem Auslaß umfasst, die einen gegenseitigen axialen Abstand haben;
1.5 an der Innenfläche der Mischtrommel sich eine Wendel, (1.3) befindet, die mehr als einen Wendelgang bildet;
1.6 die Wendel (1.3) derart verläuft, daß eine Förderung des Eintrags zum Auflöser (2) hin erfolgt; und
1.7 am Umfang der Mischtrommel (1.2) zwischen Einlaß und Auslaß eine Schwerschmutzschleuse vorgesehen ist.

2. Vorrichtung nach Anspruch 1, dadurch gekennzeichnet, daß der Einlaßbereich der Mischtrommel (1.2) aus einem in Strömungsrichtung sich erweitenden Konus gebildet ist.

3. Vorrichtung nach Anspruch 1 oder 2, dadurch gekennzeichnet, daß der Auslaufbereich der Mischtrommel (1.2) aus einem sich in Strömungsrichtung sich verjüngenden Konus gebildet ist.

4. Vorrichtung nach einem der Ansprüche 1 bis 3, dadurch gekennzeichnet, daß die Schwerschmutzschleuse in einem Bereich maximalen Durchmessers der Mischtrommel (1.2) angeordnet ist.

5. Vorrichtung nach einem der Ansprüche 1 bis 4, dadurch gekennzeichnet, daß die Schleuse eine Rückschlagfunktion ausübt.

6. Vorrichtung nach einem der Ansprüche 1 bis 5, dadurch gekennzeichnet, daß die Wendel (1.3) eine Aussparung aufweist, der ein Strömungsleitblech (1.4) derart zugeordnet ist, daß ein Rückstau der Suspension eintritt.

## Claims

1. Device for dissolving biological waste and fibrous material waste with the following units connected in series:
1.1 with a mixer (1) for receiving the waste and for mixing the latter with water, with an outlet for heavy dirt (1.5);
1.2 with a decomposer (2) for disintegrating and braking up the waste; and
1.3 with a sifter (3) for separating the dissolved waste suspension (accepted stock) from the rest of the waste, wherein
1.4 the mixer (1) comprises a rotatably mounted mixing drum (1.2) that is coaxial to the axis of rotation with an inlet and an outlet, which are spaced apart axially from one another;
1.5 on the inner surface of the mixing drum there is a helix (1.3) which forms more than one helical turn;
1.6 the helix (1.3) runs in such a way that the charge is conveyed to the decomposer (2) and
1.7 on the periphery of the mixing drum (1.2) between the inlet and outlet a sluice is provided for the heavy waste.

2. Device according to claim 1, characterised in that the inlet section of the mixing drum (1.2) is formed by a cone widening in the direction of flow.

3. Device according to claim 1 or 2, characterised in that the outlet region of the mixing drum (1,2) is formed from a cone tapering in the direction of flow.

4. Device according to one of claims 1 to 3, characterised in that the heavy dirt sluice is arranged in a region of maximum diameter of the mixing drum (1.2).

5. Device according to one of claims 1 to 4, characterised in that the sluice has a non-return function.

6. Device according to one of claims 1 to 5, characterised in that the helix (1.3) has a recess to which a flow chute (1.4) is assigned in such a way that a damming of the suspension occurs.

## Revendications

1. Dispositif pour la désagrégation de résidus biologiques et de résidus de matières fibreuses avec les groupes suivants montés en série:
1.1 avec un mélangeur (1) destiné à recevoir les résidus et à assurer leur mélange avec de l'eau, comportant une sortie pour contaminants lourds (1.5)
1.2 avec un désagrégeur (2) pour la désintégration et la fragmentation des résidus et
1.3 avec un classeur (3) pour séparer la suspension de résidus désagrégés (acceptés) des résidus de rejet où
1.4 le mélangeur (1) présente un tambour de mélange (1.2), coaxial à l'axe de rotation, logé en rotation, avec une entrée et une sortie, présentant un écartement mutuel axial
1.5 la surface interne du tambour de mélange présente une hélice (1.3) comportant plus d'un filet
1.6 l'hélice (1.3) est telle que la charge alimentée soit transportée vers le désagrégeur (2) et
1.7 un sas à contaminants lourds est prévu sur le pourtour du tambour de mélange (1.2) entre l'entrée et la sortie.

2. Dispositif selon la revendication 1, caractérisé en ce que la zone d'alimentation du tambour de mélange (1.2) est formée par un cône s'évasant dans le sens de l'écoulement.

3. Dispositif selon la revendication 1 ou 2, caractérisé en ce que la zone de sortie du tambour de mélange (1.2) est formée par un cône se rétrécissant dans le sens de l'écoulement.

4. Dispositif selon l'une des revendications 1 à 3, caractérisé en ce que le sas à contaminants lourds est disposé dans une zone de diamètre maximum du tambour de mélange (1.2).

5. Dispositif selon l'une des revendications 1 à 4, caractérisé en ce que le sas présente une fonction anti-retour.

6. Dispositif selon l'une des revendications 1 à 5, caractérisé en ce que l'hélice (1.3) présente un évidement auquel est affecté un déflecteur d'écoulement (1.4) tel qu'une retenue de la suspension se produise.
